# EUROPEAN PATENT APPLICATION

(11) **EP 3 979 521 A1**
(43) Date of publication of application: **06.04.2022**
(21) Application number: 20818076.0
(22) Date of filing: 25.05.2020
(51) Int. Cl.: H04B 10/27, H04Q 11/00

(54) **METHOD, APPARATUS, AND SYSTEM FOR PROCESSING REGISTRATION CODE**

(30) Priority: 03.06.2019 CN 201910476924
(71) Applicant: ZTE Corporation, Shenzhen, Guangdong 518057 (CN)
(72) Inventor: DAI, Li, Shenzhen, Guangdong 518057 (CN)
(74) Representative: Bertolotto, Simone
(86) International application number: PCT/CN2020/092027
(87) International publication number: WO 2020/244398

(57) **Abstract**

Provided in the present application are a method, apparatus, and system for processing a registration code, the method comprising: when a preset condition is met and a phone number is received, determining according to the phone number whether to perform registration code querying or configuration; the preset condition comprises any one of the following: the current working mode being a second mode; the current working mode switching from a first mode to the second mode; registration not being successful within a preset time period after a daughter card is started up; and the state of the daughter card switching from a registration successful state to a registration unsuccessful state.

## Description

### Field of the Invention

Embodiments of the present disclosure relate to, but are not limited to, the field of passive optical network.

### Background of the Invention

Passive Optical Network (PON) technology is a point-to-multipoint optical fiber access technology. A PON is generally made up of an office-side optical line terminal (OLT), a user-side optical network unit (ONU), and an optical distribution network (ODN).

The ONU registers to the OLT by means of a registration code. In relevant technologies, querying and modifying a registration code of the ONU are implemented by logging locally in an ONU via a serial port and in a telnet manner and performing relevant operations by entering relevant commands. However, only personnel in the field associated with this product are familiar with ONU commands. When it is required to query or configure the registration code of the ONU, a professional operation and maintenance personnel is needed to perform the operations, as a result of which there may be a manpower shortage of the operation and maintenance personnel and it is poor in terms of timeliness. For example, in the case that a device is abnormal, the device has to be replaced, and a new device after changing is required to be newly registered to the OLT; in the case that a device is offline, it is necessary to query a registration code of the ONU so as to perform troubleshooting, or the device has to be re-registered to the OLT. In order to re-register to the OLT, the registration code of the ONU needs to be configured again and reported to the OLT for registration. However, the professional operation and maintenance personnel are needed to perform operations of querying or configuring the registration code of the ONU, leading to a manpower shortage of the operation and maintenance personnel and poor timeliness.

### Summary of the Invention

In one aspect, the present disclosure provides a method for processing a registration code, including: determining, when a preset condition is met and a phone number is received, according to the phone number whether to perform registration code querying or registration code configuration, the preset condition including any one of the following: a current working mode being a second mode; a current working mode switching from a first mode to a second mode; registration being failed within a preset time period after a daughter card is started up; and a state of the daughter card switching from a successful-registration state to an unsuccessful-registration state.

In another aspect, the present disclosure further provides an apparatus for processing a registration code, including: a processor and a memory storing instructions which, when executed by the processor, implement any one of the methods for processing a registration code as described in the present disclosure.

In another aspect, the present disclosure further discloses a computer readable storage medium which stores a computer program thereon, wherein the computer program, when executed by a processor, implements steps of any one of the methods for processing a registration code as describe in the present disclosure.

In another aspect, the present disclosure further discloses a system for processing a registration code, including: an optical network unit (ONU), which is configured to determine, when a preset condition is met and a phone number is received, according to the phone number whether to perform registration code querying or registration code configuration, the preset condition including any one of the following: a current working mode being a second mode; a current working mode switching from a first mode to a second mode; registration being failed within a preset time period after a daughter card is started up; and a state of the daughter card switching from a successful-registration state to an unsuccessful-registration state; and a phone, which is configured to send a phone number dialed by a user after picking up the phone to the ONU.

### Brief Description of the Drawings

The accompanying drawings are used to provide further understanding of technical solutions of the present disclosure, constitute part of the description, is used to explain the technical solutions of the present disclosure together with the embodiments of the present disclosure, and do not constitute limitations on the technical solutions of the present disclosure.
Fig. 1 is a schematic diagram of a network architecture in relevant technologies;
Fig. 2 is a flowchart of a method for processing a registration code according to an embodiment of the present disclosure;
Fig. 3A is a flowchart One of a method for setting a working mode according to an embodiment of the present disclosure;
Fig. 3B is a flowchart Two of the method for setting the working mode according to the embodiment of the present disclosure;
Fig. 3C is a flowchart Three of the method for setting the working mode according to the embodiment of the present disclosure;
Fig. 4 is a schematic diagram of structural components of an apparatus for processing a registration code according to an embodiment of the present disclosure;
Fig. 5 is a schematic diagram of structural components of an apparatus for processing a registration code according to an embodiment of the present disclosure;
Fig. 6 is a schematic diagram of structural components of an apparatus for processing a registration code according to an embodiment of the present disclosure; and
Fig. 7 is a schematic diagram of structural components of a system for processing a registration code according to an embodiment of the present disclosure.

### Detailed Description of the Embodiments

Embodiments of the present disclosure will be described in detail below with reference to accompanying drawings. It should be noted that, as long as there is no conflict, the embodiments of the present disclosure and features in the embodiments may be combined with each other in any suitable manner.

Steps illustrated in flowcharts in the accompanying drawings may be implemented in a computer system, such as a group of computer executable instructions. Moreover, although logical sequences are illustrated in the accompanying drawings, in some cases, the steps illustrated or described may be implemented in sequences different from those illustrated or described herein.

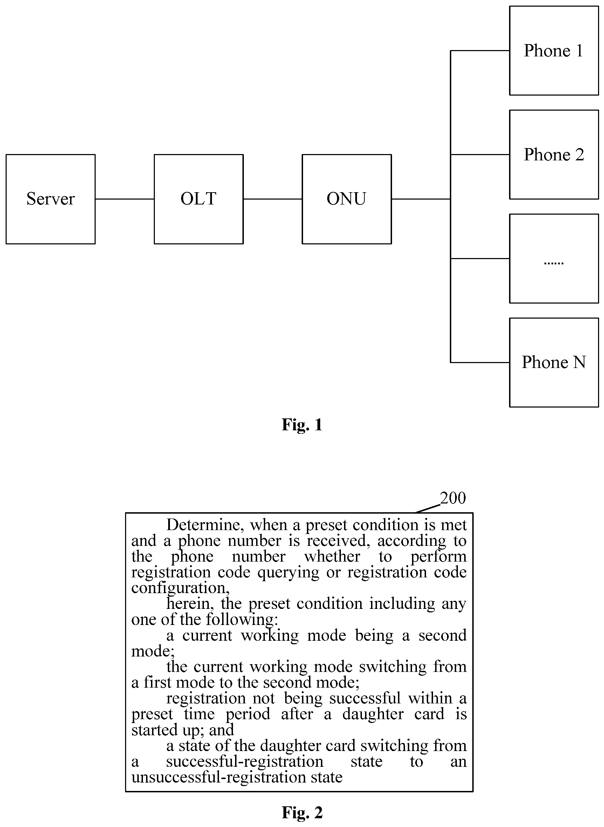

In relevant technologies, as shown in Fig. 1, an ONU is connected downward with N phones. Herein, N is an integer greater than or equal to 1. Normally, for each of the phones, only when it is registered to an upstream server of an OLT via the ONU, can a normal call be enabled via the ONU and the OLT.

In an embodiment of the present disclosure, one of the N phones is used to implement processing of a registration code, such as registration code querying or registration code configuration. For this purpose, two working modes may be set in the ONU, which are respectively a first mode (also called as an ordinary mode) and a second mode (also called as a special mode or a slid mode).

Under the first mode, the ONU registers to the OLT, and the phone registers to a server, so that a voice user implements normal voice communication via the phone. However, under this mode, the voice user cannot perform processing of the registration code, such as registration code querying or registration code configuration, via the phone.

Under the second mode, the ONU does not register to the OLT, and the phone does not register to the server, so that the voice user cannot implement normal voice communication via the phone. Under this mode, the voice user can perform processing of the registration code, such as registration code querying or registration code configuration, via the phone.

It is certain that, in embodiments of the present disclosure, whether the voice user may perform processing of the registration code, such as registration code querying or registration code configuration, via the phone may also be determined based on whether registration of the ONU is successful, instead of setting the two working modes for the ONU.

Referring to Fig. 2, an embodiment of the present disclosure provides a method for processing a registration code, including step 200.

At step 200, when a preset condition is met and a phone number is received, whether to perform registration code querying or registration code configuration is determined according to the phone number. Herein, the preset condition includes any one of the following: a current working mode being a second mode; a current working mode switching from a first mode to a second mode; registration being failed within a preset time period after a daughter card is started up; and a state of the daughter card switching from a successful-registration state to an unsuccessful-registration state. In this case, the daughter card is a key component in an ONU device, and is mainly configured to complete registration interaction to the OLT, so as to achieve a PON function.

In an embodiment of the present disclosure, if the two working modes are set, whether to perform processing of the registration code, such as registration code querying or registration code configuration, may be determined by directly determining whether the current working mode is the second mode. For example, when the current working mode is the second mode, it is determined that processing of the registration code, such as registration code querying or registration code configuration, may be performed; and when the current working mode is not the second mode (in other words, it is the first mode), it is determined that processing of the registration code, such as registration code querying or registration code configuration, cannot be performed.

Alternatively, whether to perform processing of the registration code, such as registration code querying or registration code configuration, may be determined by determining whether the current working mode switches from the first mode to the second mode. For example, when the current working mode switches from the first mode to the second mode, it is determined that processing of the registration code, such as registration code querying or registration code configuration, may be performed.

If there is no setting of the two working modes, whether to perform processing of the registration code, such as registration code querying or registration code configuration, may be determined by determining a state of the daughter card. For example, a determination is performed on whether registration is successful within a preset time period after the daughter card is started up. If registration is failed within the preset time period after the daughter card is started up, it is determined that processing of the registration code, such as registration code querying or registration code configuration, may be performed; and if registration is successful within the preset time period after the daughter card is started up, it is determined that processing of the registration code, such as registration code querying or registration code configuration, cannot be performed. For another example, a determination is performed on whether a state of the daughter card switches from a successful-registration state to an unsuccessful-registration state. When the state of the daughter card switches from the successful-registration state to the unsuccessful-registration state, it is determined that processing of the registration code, such as registration code querying or registration code configuration, may be performed; and when the state of the daughter card switches from the unsuccessful-registration state to the successful-registration state, it is determined that processing of the registration code, such as registration code querying or registration code configuration, cannot be performed.

In an exemplary embodiment, in a case where the two working modes are set, the working modes may be switched according to a state of the daughter card.

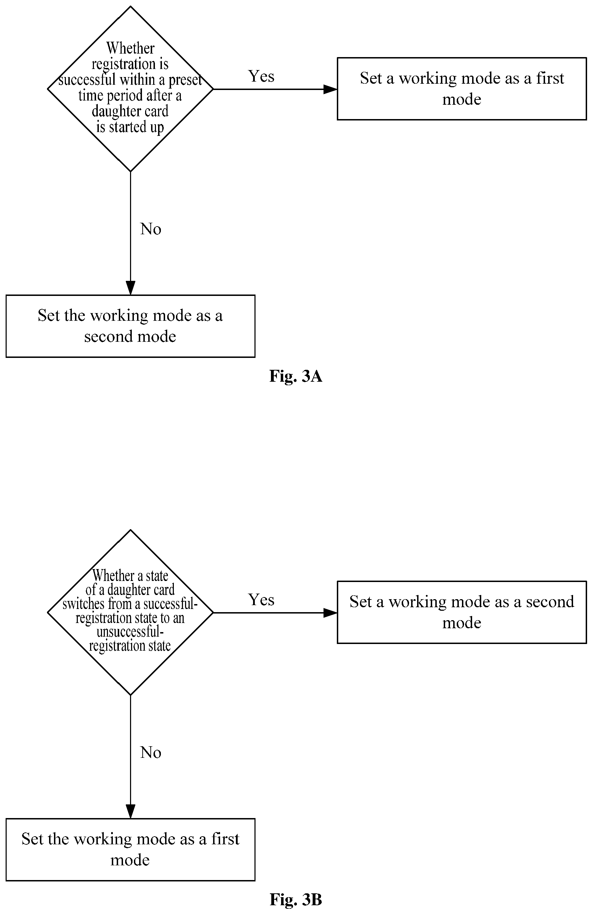

For example, as shown in Fig. 3A, a determination is performed on whether registration is successful within a preset time period after a daughter card is started up. When registration is successful within the preset time period after the daughter card is started up, a working mode is set as the first mode; and when registration is failed within the preset time period after the daughter card is started up, the working mode is set as the second mode.

For another example, as shown in Fig. 3B, a determination is performed on whether a state of the daughter card switches from a successful-registration state to an unsuccessful-registration state. If so, a working mode is set as the second mode; and if not, the working mode is set as the first mode.

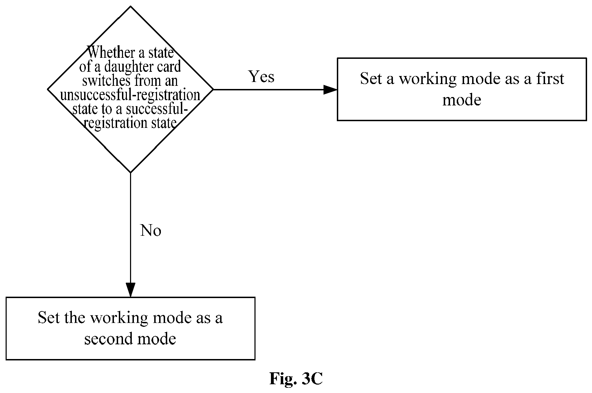

For another example, as shown in Fig. 3C, a determination is performed on whether a state of a daughter card switches from an unsuccessful-registration state to a successful-registration state. If so, a working mode is set as the first mode; and if not, the working mode is set as the second mode.

In an embodiment of the present disclosure, registration code querying or registration code configuration may be implemented by using any one of the following manners.

In manner one, when a phone number is a first specific number (for example, ^{∗} 1#), the registration code querying is performed; and when the phone number is a second specific number (for example, ^{∗}2#), the registration code configuration is performed; and when the phone number is neither the first specific number nor the second specific number, a process ends, or an audio file corresponding to a voice prompt for reminding that the phone number is wrong is sent to the phone.

In the manner one, when the phone receives the audio file corresponding to the voice prompt for reminding that the phone number input by a phone user is wrong, the audio file is played; and when the phone user hears the voice prompt, the phone user may hang up and pick up the phone again to dial a phone number.

In the manner one, the first specific number is specifically used for the registration code querying. Accordingly, when the phone number is the first specific number, a process of querying a registration code is performed; and when the phone number is not the first specific number, the process of querying the registration code is not performed.

The second specific number is specifically used for the registration code configuration. Accordingly, when the phone number is the second specific number, a process of configuring a registration code is performed; and when the phone number is not the second specific number, the process of configuring the registration code configuration is not performed

In manner two, when a phone number is a third specific number, an audio file corresponding to a first voice prompt for reminding the phone user to input an operation type is sent to the phone; then a first key value of the phone is received and converted to a corresponding operation type; when the operation type corresponding to the first key value is querying, said registration code querying is performed; when the operation type corresponding to the first key value is configuration, said registration code configuration is performed; and when the phone number is not the third specific number or the operation type corresponding to the first key value is neither querying nor configuration, the process ends, or alternatively an audio file corresponding to a voice prompt for reminding that the phone number or the operation type input by the phone user is wrong is sent to the phone.

In the manner two, when the phone receives the audio file corresponding to the first voice prompt, the audio file corresponding to the first voice prompt is played. For example, "please input an operation type" or "please input an operation type: 0 is for querying, and 1 is for configuration" is played. The present embodiment does not make any limitation on the specific form and content of the voice prompt.

When the phone receives the audio file corresponding to the voice prompt for reminding that the phone number input by the user is wrong, the audio file is played; when the phone user hears the voice prompt, the phone user may hang up and pick up the phone again to dial a phone number.

When the phone receives the audio file corresponding to the voice prompt for reminding that the operation type input by the user is wrong, the audio file is played; and when the phone user hears the voice prompt, the phone user may hang up and pick up the phone again to dial a phone number, and certainly may also input once again the first key value corresponding to the operation type.

In the manner two, the third specific number is configured for processing the registration code. When the phone number is the third specific number, it is indicated that processing of the registration code, such as registration code querying or registration code configuration, may be performed. Specifically, whether to perform the registration code querying or the registration code configuration needs to be further determined based on an operation type further input by the phone user. When the phone number is not the third specific number, it is indicated that processing of the registration code cannot be performed.

In the manner two, the third specific number may be the first specific number or the second specific number, and may also be another specific number. The present embodiment does not make any limitation on this matter.

In an embodiment of the present disclosure, performing the registration code querying includes: sending to the phone an audio file corresponding to a second voice prompt for reminding the phone user to input a registration type; receiving and converting a second key value to a corresponding registration type, and acquiring, from pre-saved registration values corresponding to registration types, a registration value that corresponds to the registration type corresponding to the second key value; and sending to the phone an audio file corresponding to a third voice prompt for playing the acquired registration value .

In an embodiment of the present disclosure, performing the registration code configuration includes: sending to the phone the audio file corresponding to the second voice prompt for reminding the phone user to input a registration type; receiving and converting a second key value to a corresponding registration type, and sending to the phone an audio file corresponding to a fourth voice prompt for reminding the phone user to input a registration value; and receiving and converting a third key value to a corresponding registration value, and modifying a registration value that corresponds to the registration type corresponding to the second key value to the registration value corresponding to the third key value.

In an embodiment of the present disclosure, when the phone receives the audio file corresponding to the second voice prompt, the audio file corresponding to the second voice prompt is played. For example, "please input a registration type", "please input a registration type that needs to be queried", or "please input a registration type that needs to be configured" is played.

When the phone receives the audio file corresponding to the third voice prompt, the audio file corresponding to the third voice prompt is played. For example, "the registration value to be queried is A2" is played.

When the phone receives the audio file corresponding to the fourth voice prompt, the audio file corresponding to the fourth voice prompt is played. For example, "please input a registration value" or "please input a registration value to be configured" is played.

In fact, when the user performs an input via the phone, only ten numbers, i.e., 0 to 9, and ^{∗} and # can be input. Accordingly, it is required to use a combination of key values including the ten numbers, i.e., 0 to 9, and ^{∗} and # (such as the first key value, the second key value, and the third key value mentioned above) to correspond to a registration type, so that the user can implement an input of the operation type, the registration type, and the registration value by inputting a corresponding key value(s). After the phone detects the key value(s) input by the user, the key value(s) input by the user is/are sent to the ONU, and the ONU converts the key value(s) input by the user to a corresponding operation type, registration type, or registration value. In order to know whether input of the user ends, ^{∗} or # may be used as an end mark.

In one exemplary embodiment, the operation type and the registration type may be input using digits shown in Table 1. As shown in Table 1, for the operation type, 0 is used to indicate querying, and 1 is used to indicate configuration. After the user inputs a corresponding digit, whether the digit input by the user indicates the querying or the configuration can be known by referring to Table 1.

Similarly, for the registration type, 1 is used to indicate *sn;* 2 is used to indicate *snpw;* 3 is used to indicate *loid;* 4 is used to indicate *loidpw;* 5 is used to indicate mac; and 6 is used to indicate pw. After the user inputs a corresponding digit, which registration type the digit input by the user indicates can be known by referring to Table 1.

**Table 1**

| Key value corresponding to an operation type | Key value corresponding to a registration type | Registration value | Registration type |
|---|---|---|---|
| 0\|1 | 1 | | query \| configure a value of sn |
| 0\|1 | 2 | | query \| configure a value of snpw |
| 0\|1 | 3 | | query \| configure a value of loid |
| 0\|1 | 4 | | query \| configure a value of loidpw |
| 0\|1 | 5 | | query \| configure a value of mac |
| 0\|1 | 6 | | query \| configure a value of pw |

It is certain that Table 1 only gives an example that the key value corresponds to the operation type and the registration type, and there are other correspondence examples. How the key value corresponds to the operation type and the registration type specifically does not construct limitation to the protection scope of the present embodiment.

In one exemplary example, the registration value may be input by using digits as shown in Table. 2. As shown in Table. 2, ^{∗∗}1# is used to indicate letter A; ^{∗∗}2# is used to indicate letter B; ^{∗∗}3# is used to indicate letter C; ^{∗∗}4# is used to indicate letter D; ^{∗∗}5# is used to indicate letter E; ^{∗∗}6# is used to indicate letter F; ^{∗}7# is used to indicate letter G; ^{∗∗}8# is used to indicate letter H; ^{∗∗}9# is used to indicate letter I; ^{∗∗}10# is used to indicate letter J; ^{∗∗}11# is used to indicate letter K; ^{∗∗}12# is used to indicate letter L; ^{∗∗}13# is used to indicate letter M; ^{∗∗}14# is used to indicate letter N; ^{∗∗}15# is used to indicate letter O; ^{∗∗}16# is used to indicate letter P; ^{∗∗}17# is used to indicate letter Q; ^{∗∗}18# is used to indicate letter R; ^{∗∗}19# is used to indicate letter S; ^{∗∗}20# is used to indicate letter T; ^{∗∗}21# is used to indicate letter U; ^{∗∗}22# is used to indicate letter V; ^{∗∗}23# is used to indicate letter W; ^{∗∗}24# is used to indicate letter X; ^{∗∗}25# is used to indicate letter Y; ^{∗∗}26# is used to indicate letter Z; 1 is used to indicate number 1; and 2 is used to indicate number 2, and so on. After the user inputs the corresponding key values, which registration value the key values input by the user indicates can be known by referring to Table 2.

**Table 2**

| Key value input | Corresponding letter |
|---|---|
| ^{∗∗}1# | A |
| ^{∗∗}2# | B |
| ^{∗∗}3# | c |
| ^{∗∗}4# | D |
| ^{∗∗}5# | E |
| ^{∗∗}6# | F |
| ^{∗∗}7# | G |
| ^{∗∗}8# | H |
| ^{∗∗}9# | I |
| ^{∗∗}10# | J |
| ^{∗∗}11# | K |
| ^{∗∗}12# | L |
| ^{∗∗}13# | M |
| ^{∗∗}14# | N |
| ^{∗∗}15# | O |
| ^{∗∗}16# | P |
| ^{∗∗}17# | Q |
| ^{∗∗}18# | R |
| ^{∗∗}19# | s |
| ^{∗∗}20# | T |
| ^{∗∗}21# | U |
| ^{∗∗}22# | V |
| ^{∗∗}23# | w |
| ^{∗∗}24# | X |
| ^{∗∗}25# | Y |
| ^{∗∗}26# | Z |
| 1 | 1 |
| 2 | 2 |
| ... | ... |

In the above manner one and manner two, after performing the registration code configuration, the method further includes any one of the following steps: sending to the phone an audio file corresponding to a fifth voice prompt for reminding that the configuration made by the phone user is successful; sending to the phone an audio file corresponding to a sixth voice prompt for reminding that the configuration made by the phone user is failed and a seventh voice prompt for reminding the user to perform an input once again; sending to the phone the audio file corresponding to the sixth voice prompt for reminding that the configuration made by the phone user is failed; and reporting a registration value corresponding to a registration type to an optical line terminal (OLT).

In an embodiment of the present disclosure, when the phone receives the audio file corresponding to the fifth voice prompt, the audio file corresponding to the fifth voice prompt is played. For example, "configuration of the registration value is successful" is played.

When the phone receives the audio file corresponding to the sixth voice prompt, the audio file corresponding to the sixth voice prompt is played. For example, "configuration of the registration value is failed" is played.

When the phone receives the audio file corresponding to the seventh voice prompt, the audio file corresponding to the seventh voice prompt is played. For example, "whether to perform an input once again" or "please input once again" is played. If the user chooses yes, then the step of sending the audio file corresponding to the second voice prompt for reminding the user to input a registration type is executed next.

The present embodiment realizes registration code querying or registration code configuration based on the phone number without performing the registration code querying or the registration code configuration on site, so that processing of the registration code is simplified and timeliness is improved.

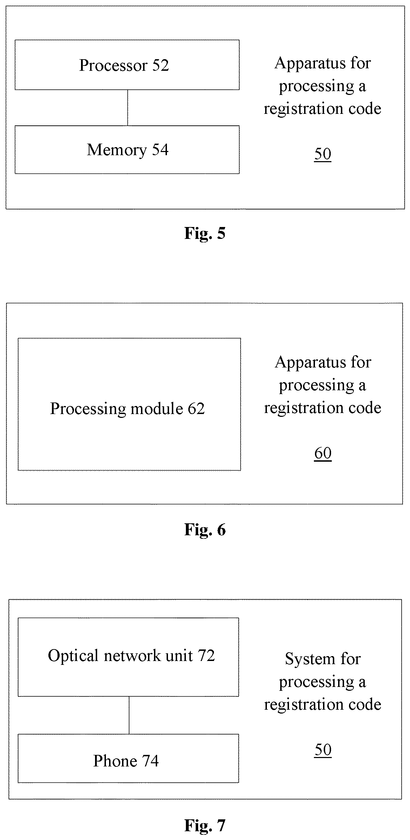

As shown in Fig. 5, another embodiment of the present disclosure provides an apparatus 50 for processing a registration code, which includes a processor 52 and a memory 54. The memory stores instructions therein. The instructions, when executed by the processor 52, implement any method for processing a registration code as mentioned above.

In a practical application, the above memory 54 may be: a volatile memory, such as an RAM; a non-volatile memory, such as an ROM, a flash memory, a hard disk drive (HDD), or a solid-state drive (SSD); or a combination of the above types of memory. The memory 54 provides instructions and data to the processor 52.

The above processor 52 may be at least one of an application specific integrated circuit (ASIC), a digital signal processor (DSP), a digital signal processing device (DSPD), a programmable logic device (PLD), a field programmable gate array (FPGA), a central processor (CPU), a controller, a microcontroller, and a microprocessor. An electronic element for implementing the function of the above processor may also be in other forms, and the present embodiment does not make any limitation on this matter.

Another embodiment of the present disclosure provides a computer readable medium which stores a computer program thereon. The computer program, when executed by a processor, implements steps of any method for processing a registration code as mentioned above.

As shown in Fig. 6, yet another embodiment of the present disclosure provides an apparatus 60 for processing a registration code, including a processing module 62, which is configured to determine, when a preset condition is met and a phone number is received, according to the phone number whether to perform registration code querying or registration code configuration. The preset condition includes any one of the following: a current working mode being a second mode; a current working mode switching from a first mode to a second mode; registration being failed within a preset time period after a daughter card is started up; and a state of the daughter card switching from a successful-registration state to an unsuccessful-registration state.

In an embodiment of the present disclosure, the processing module 62 is configured to implement determining whether to perform the registration code querying according to the phone number by using at least either of the following manners: when the phone number is a first specific number, the registration code querying is performed; and when the phone number is a second specific number, the registration code configuration is performed.

In an embodiment of the present disclosure, the processing module 62 is configured to implement determining whether to perform the registration code querying according to the phone number by using at least either of the following manners. When the phone number is a third specific number, an audio file corresponding to a first voice prompt for reminding the phone user to input an operation type is sent to the phone; then a first key value is received and converted to a corresponding operation type; and, when the operation type corresponding to the first key value is querying, the registration code querying is performed. Also, when the phone number is the third specific number, the audio file corresponding to the first voice prompt for reminding the phone user to input an operation type is sent to the phone; then a first key value is received and converted to a corresponding operation type; and when the operation type corresponding to the first key value is configuration, the registration code configuration is performed.

In an embodiment of the present disclosure, the processing module 62 is configured to implement the registration code querying by using the following manner. An audio file corresponding to a second voice prompt for reminding the phone user to input a registration type is sent to the phone; then a second key value is received and converted to a corresponding registration type, and a registration value that corresponds to the registration type corresponding to the second key value is acquired from pre-saved registration values corresponding to registration types; and an audio file corresponding to a third voice prompt for playing the acquired registration value is sent to the phone.

In an embodiment of the present disclosure, the processing module 62 is configured to implement the registration code configuration by using the following manner. The audio file corresponding to the second voice prompt for reminding the phone user to input a registration type is sent to the phone; then a second key value is received and converted to a corresponding registration type, and an audio file corresponding to a fourth voice prompt for reminding the phone user to input a registration value is sent to the phone; and a third key value is received and converted to a corresponding registration value, and a registration value that corresponds to the registration type corresponding to the second key value is modified to the registration value corresponding to the third key value.

In an embodiment of the present disclosure, the processing module 62 is configured to execute any one of the following steps: sending to the phone an audio file corresponding to a fifth voice prompt for reminding that the configuration made by the phone user is successful; sending to the phone an audio file corresponding to a sixth voice prompt for reminding that the configuration made by the phone user is failed and a seventh voice prompt for reminding the phone user to perform an input once again; sending to the phone the audio file corresponding to the sixth voice prompt for reminding that the configuration made by the phone user is failed; and reporting the registration value corresponding to the registration type to the optical line terminal (OLT).

The specific implementation process of the above apparatus for processing of the registration code is the same as the specific implementation process of the method for processing of the registration code in the foregoing embodiment, and details are not repeated any further herein.

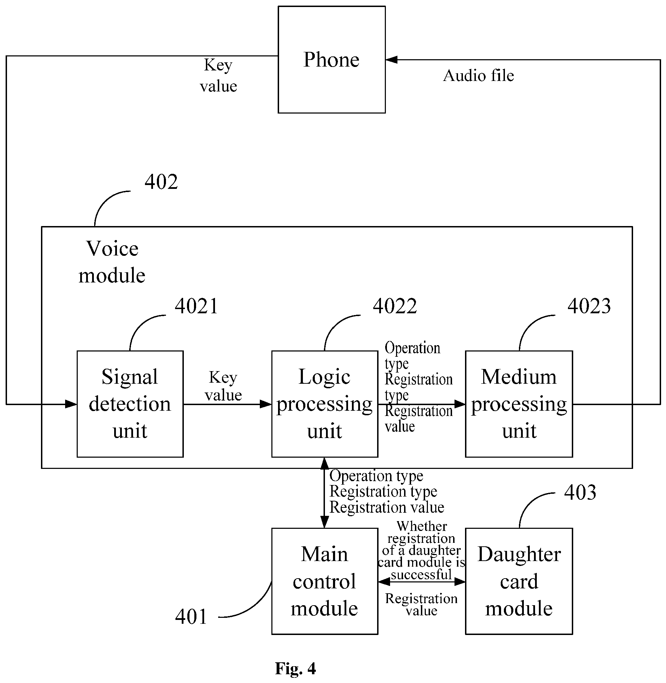

In one exemplified embodiment, as shown in Fig. 4, the above apparatus for processing the registration code includes a main control module 401, a voice module 402, and a daughter card module 403. The voice module 402 includes: a signal detection unit 4021, a logic processing unit 4022, and a medium processing unit 4023.

In this case, the signal detection unit 4021 is configured to receive a key value (including a first key value, a second value, or a third value) input by a user.

The logic processing unit 4022 is configured to convert the first key value to a corresponding operation type, convert the second key value to a corresponding registration type, and convert the third key value to a corresponding registration value.

The medium processing unit 4023 is configured to: send to a phone, when a phone number is a first specific number, an audio file corresponding to a second voice prompt for reminding the phone user to input a registration type; and send to the phone, when a registration value that corresponds to a registration type corresponding to a second key value is acquired, an audio file corresponding to a third voice prompt for playing the acquired registration value.

Alternatively, the medium processing unit 4023 is configured to: send to the phone, when a phone number is a third specific number, an audio file corresponding to a first voice prompt for reminding the phone user to input an operation type; send to the phone, when an operation type corresponding to a first key value is querying, the audio file corresponding to the second voice prompt for reminding the phone user to input a registration type; and send to the phone, when a registration value that corresponds to a registration type corresponding to the second key value is acquired, the audio file corresponding to the third voice prompt for playing the acquired registration value.

Alternatively, the medium processing unit 4023 is configured to: send to the phone, when a phone number is a second specific number, the audio file corresponding to the second voice prompt for reminding the phone user to input a registration type; and send to the phone, when a registration type corresponding to the second key value is acquired, an audio file corresponding to a fourth voice prompt for reminding the phone user to input a registration value.

Alternatively, the medium processing unit 4023 is configured to: send to the phone, when a phone number is the third specific number, the audio file corresponding to the first voice prompt for reminding the phone user to input an operation type; send to the phone, when an operation type corresponding to the first key value is configuration, the audio file corresponding to the second voice prompt for reminding the phone user to input a registration type; and send to the phone, when a registration type corresponding to the second key value is acquired, the audio file corresponding to the fourth voice prompt for reminding the phone user to input a registration value.

The main control module 401 is configured to: save registration values corresponding to respective registration types; and acquire a registration value that corresponds to the registration type corresponding to the second key value when a preset condition is met and the phone number is the first specific number.

Alternatively, the main control module 401 is configured to modify a registration value that corresponds to the registration type corresponding to the second key value to a registration value corresponding to the third key value when the preset condition is met and the phone number is the second specific number.

Alternatively, the main control module 401 is configured to acquire the registration value that corresponds to the registration type corresponding to the second key value when the preset condition is met, the phone number is the third specific number, and an operation type corresponding to the first key value is querying.

Alternatively, the main control module 401 is configured to modify a registration value that corresponds to the registration type corresponding to the second key value to a registration value corresponding to the third key value when the preset condition is met, the phone number is the third specific number, and an operation type corresponding to the first key value is configuration.

The daughter card module 403 is configured to determine whether registration of a daughter card is successful or not and report the registration value corresponding to the registration type to an OLT.

Examples of the method in the embodiment of the present disclosure are described below with respect to the architecture of the apparatus for processing the registration code.

### Instance 1

In an embodiment of the present disclosure, switching between an ordinary mode and a slid mode in an ONU is described.

Figs. 3A to 3C show schematic diagrams of working processes of switching between the ordinary mode and the slid mode in the ONU. Specific implementation manners are as follows.

As shown in Fig. 3A, the following steps are included.

At step 1, a determination is performed on whether registration of the ONU is successful within N minutes after a daughter card is started up; and if so, a process enters step 2, and if not, the process enters step 3.

At step 2, a daughter card module notifies a main control module of setting a working mode to an ordinary mode, which is a default and refers to that: only when a voice user (i.e., a phone user) registers to a server successfully, can a dialing sound be played, and the voice user cannot modify a registration code.

At step 3, the daughter card module notifies the main control module of setting the working mode to a slid mode.

As shown in Fig. 3B, the following steps are included.

At step 1, the daughter card module detects that whether a state of the daughter card switches from a successful-registration state to an unsuccessful-registration state; and if so, a process enters step 2, and if not, the process enters step 3.

At step 2, the daughter card module notifies the main control module of setting the working mode to a slid mode.

At step 3, the original ordinary mode remains unchanged.

As shown in Fig. 3C, the following steps are included.

At step 1, the daughter card module detects that whether a state of the daughter card switches from an unsuccessful-registration state to a successful-registration state; and if so, a process enters step 2, and if not, the process enters step 3.

At step 2, the daughter card module notifies the main control module of setting the working mode to an ordinary mode.

At step 3, the original slide mode remains unchanged.

### Instance 2

In the present instance, a working process of a voice user querying a registration code is described, and the following steps are included.

At step 1, a slid mode is ready.

At step 2, a voice module initiates an automatic switching process.

At step 3, a signal detection unit receives a phone number dialed by a user after picking up a phone and determines whether the phone number dialed by the user after picking up the phone is ^{∗}1#; and if not, the process enters step 4, and if so, the process enters step 5.

At step 4, no access to registration code querying is provided.

At step 5, the signal detection unit converts the number dialed by the user after picking up the phone to an operation type of querying; a medium processing unit sends to the phone an audio file corresponding to a second voice prompt for reminding the user to input a registration type; the signal detection unit receives a second key value; and a logic processing unit converts the second key value to a corresponding registration type, and organizes and sends the operation type of querying and the registration type corresponding to the second key value to a main control module. A correspondence relationship between numerical values and the registration types can be seen in Table 1. For example, 1 represents *sn.*

At step 6, the main control module sends a registration value that corresponds to the registration type corresponding to the second key value to the logic processing unit.

At step 7, the logic processing unit sends the registration value that corresponds to the registration type corresponding to the second key value to the medium processing unit, and the medium processing unit sends to the phone an audio file corresponding to a third voice prompt of the acquired registration value.

At step 8, when the phone receives the audio file corresponding to the third voice prompt, the audio file corresponding to the third voice prompt is played.

### Instance 3

In the present instance, a working process of configuring a registration code by a voice user is described, and the following steps are included.

At step 1, a slid mode is ready.

At step 2, a voice module initiates an automatic switching process.

At step 3, a signal detection unit receives a phone number dialed by a user after picking up a phone and determines whether the phone number dialed by the user after picking up the phone is ^{∗}2#; and if not, the process enters step 4, and if so, the process enters step 5.

At step 4, no access to registration code configuration is provided.

At step 5, the signal detection unit converts the number dialed by the user after picking up the phone to an operation type of configuration; a medium processing unit sends to the phone an audio file corresponding to a second voice prompt for reminding the user to input a registration type; the signal detection unit receives a second key value; and a logic processing unit converts the second key value to a corresponding registration type. A correspondence relationship between numerical values and the registration types can be seen in Table 1. For example, 1 represents *sn.*

At step 6, the medium processing unit sends to the phone an audio file corresponding to a fourth voice prompt for reminding the user to input a registration value; and the signal detection unit receives a third key value, and converts the third key value to a corresponding registration value which ends with #.

For example, the signal detection unit detects that ^{∗∗}1#2# is input to the phone. When a logic unit receives a phone number that begins with ^{∗∗}, it is indicated that the phone number needs to be decoded into a letter, that is, ^{∗∗}1# needs to be decoded into letter A; and a registration value configured in this process is A2.

At step 7, the logical processing unit sends the operation type, the registration type, and the registration value decoded to a main control module. A format can be seen in Table 1. For example, in a case where the operation type is 1, the registration type is 2, and the registration value is 123A, it indicates to configure *snpw* with a value 123A.

At step 8, the main control module configures the registration value corresponding to the specific registration type; and if the registration value is configured successfully, the process enters step 9; and if the registration value is failed to be configured, the process enters step 10.

At step 9, the main control module delivers a success tag to the logic processing unit, and the process enters step 13.

At step 10, the main control module delivers a failure tag to the logic processing unit, and the process enters step 11.

At step 11, the logic processing unit notifies the medium processing unit to send to the phone an audio file corresponding to a sixth voice prompt for reminding that configuration made by the phone user is failed and an audio file corresponding to a seventh voice prompt for reminding the user to perform an input once again; and if it is to perform configuration once again, the medium processing unit sends to the phone the audio file corresponding to the second voice prompt for reminding the user to input a registration type, that is, the process enters step 5; and if it is not to perform configuration again, the process enters step 12.

At step 12, no access to registration code configuration is provided.

At step 13, the logic processing unit notifies the medium processing unit to send to the phone an audio file corresponding to a fifth voice prompt for reminding that the configuration made by the phone user is successful.

### Instance 4

In the present instance, a working process of reporting a registration value by an ONU is described, and includes the following steps.

At step 1, a daughter module detects whether a state of a daughter card is a registration state; and if so, the process enters step 2, and if not, the process enters step 3.

At step 2, the daughter card does not perform any operation.

At step 3, the daughter module acquires a latest registration value from a main control module every other 60s, and reports the registration value to an OLT. If registration is successful after reporting to the OLT, the process enters step 2, and if registration is failed, step 3 is repeated as a cycle.

As shown in Fig. 7, an embodiment of the present disclosure provides a system 70 for processing a registration code, including: an optical network unit (ONU) 72, which is configured to determine, when a preset condition is met and a phone number is received, according to the phone number whether to perform registration code querying or registration code configuration, the preset condition including any one of the following: a current working mode being a second mode; a current working mode switching from a first mode to a second mode; registration being failed within a preset time period after a daughter card is started up; and a state of the daughter card switching from a successful-registration state to an unsuccessful-registration state; and a phone 74, which is configured to send to the ONU 72 a phone number dialed by a user after picking up the phone.

In an embodiment of the present disclosure, the ONU 72 is further configured to implement determining whether to perform registration code querying according to the phone number by using at least either of the following manners: when a phone number is a first specific number, registration code querying is performed; and when the phone number is a second specific number, registration code configuration is performed.

In an embodiment of the present disclosure, the ONU 72 is further configured to implement determining whether to perform registration code querying according to the phone number by using at least either of the following manners. When the phone number is a third specific number, an audio file corresponding to a first voice prompt for reminding the phone 74 user to input an operation type is sent to the phone 74; then a first key value is received and converted to a corresponding operation type; and when the operation type corresponding to the first key value is querying, the registration code querying is performed. Also, when the phone number is the third specific number, the audio file corresponding to the first voice prompt for reminding the phone 74 user to input the operation type is sent to the phone 74; then the first key value is received and converted to a corresponding operation type; and, when the operation type corresponding to the first key value is configuration, the registration code configuration is performed.

The phone 74 is further configured to: receive an audio file corresponding to the first voice prompt, and play the audio file corresponding to the first voice prompt; and detect the first key value, and send the first key value to the ONU 72.

In an embodiment of the present disclosure, the ONU 72 is further configured to implement the registration code querying by using the following manner. An audio file corresponding to a second voice prompt for reminding the phone 74 user to input a registration type is sent to the phone 74; a second key value is received and converted to a corresponding registration type, and a registration value that corresponds to the registration type corresponding to the second key value is acquired from pre-saved registration values corresponding to registration types; and an audio file corresponding to a third voice prompt for playing the acquired registration value is sent to the phone 74. The phone 74 is further configured to: receive the audio file corresponding to the second voice prompt, and play the audio file corresponding to the second voice prompt; detect the second key value, and send the second key value to the ONU 72; and receive the audio file corresponding to the third voice prompt, and play the audio file corresponding to the third voice prompt.

In an embodiment of the present disclosure, the ONU 72 is further configured to implement the registration code configuration by using the following manner. The audio file corresponding to the second voice prompt for reminding the phone 74 user to input a registration type is sent to the phone 74; then a second key value of the phone 74 is received and converted to a corresponding registration type, and an audio file corresponding to a fourth voice prompt for reminding the phone 74 user to input a registration value is sent to the phone 74; and a third key value of the phone 74 is received and converted to a corresponding registration value, and a registration value that corresponds to the registration type corresponding to the second key value is modified to the registration value corresponding to the third key value. The phone 74 is further configured to: receive the audio file corresponding to the second voice prompt, and play the audio file corresponding to the second voice prompt; detect the second key value, and send the second key value to the ONU 72; receive the audio file corresponding to the fourth voice prompt, and play the audio file corresponding to the fourth voice prompt; and detect the third key value, and send the third key value to the ONU 72.

In an embodiment of the present disclosure, the ONU 72 is further configured to execute any one of the following steps: sending to the phone 74 an audio file corresponding to a fifth voice prompt for reminding that the configuration made by the phone 74 user is successful; sending to the phone 74 an audio file corresponding to a sixth voice prompt for reminding that the configuration made by the phone 74 user is failed and a seventh voice prompt for reminding the phone 74 user to perform an input once again; sending to the phone 74 the audio file corresponding to the sixth voice prompt for reminding that the configuration made by the phone 74 user is failed; or reporting the registration value corresponding to the registration type to the optical line terminal (OLT). The phone 74 is further configured to execute any one of the following steps: receiving the audio file corresponding to the fifth voice prompt, and playing the audio file corresponding to the fifth voice prompt; receiving the audio file corresponding to the sixth voice prompt, and playing the audio file corresponding to the sixth voice prompt; or receiving the audio file corresponding to the sixth voice prompt and the audio file corresponding to the seventh voice prompt, and playing the audio file corresponding to the sixth voice prompt and the audio file corresponding to the seventh voice prompt.

The specific implementation process of the above system for processing the registration code is the same as the specific implementation process of the method for processing the registration code in the foregoing embodiment, and details are not repeated herein.

A person of ordinary skill in the art may understand that, all or some steps of the method disclosed above and functional modules/units of a system or a device may be implemented as software, firmware, hardware, and a proper combination thereof. In an embodiment of the hardware, a division of the functional modules/units mentioned in the above description does not necessarily correspond to a division of physical components. For example, one physical component may have multiple functions, or one function or step may be implemented by several physical components cooperatively. Some components or all components may be implemented as software executed by a processor, such as a digital signal processor or a microprocessor, or may be implemented as hardware, or may be implemented as an integrated circuit, such as an application-specific integrated circuit. Such software may be distributed on a computer readable medium, and the computer readable medium may include a computer storage medium (or non-transient medium) and a communication medium (or transient medium). As is known to a person of ordinary skill in the art, the term of computer storage medium includes volatile and non-volatile, removable and non-removable mediums that may be implemented in any method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital video disk (DVD) or other optical disk storage, a magnetic cassette, a magnetic tape, a magnetic disk storage or other magnetic storage device, or any other medium which can be used to store the desired information and can be accessed by a computer. Besides, it is well known to a person of ordinary skill in the art that the communication medium typically includes a computer readable instruction, a data structure, a program module, or other data in a modulated data signal, such as a carrier wave or other transport mechanisms, and may include any information delivery medium.

Although implementation manners disclosed in embodiments of the present disclosure are as above, the content described only involves implementation manners used for facilitating understanding of the embodiments of the present disclosure and is not used to limit the embodiments of the present disclosure. Any person skilled in the field to which the embodiments of the present disclosure belong may make any modification and change on the implementation manners and details without departing from the spirit and scope disclosed in the embodiments of the present disclosure, but the patent protection scope of the embodiments of the present disclosure should still be determined by the scope defined in the claims.

## Claims

1. A method for processing a registration code, **characterized in that**, the method comprises:
determining, when a preset condition is met and a phone number is received, according to the phone number whether to perform registration code querying or registration code configuration,
wherein, the preset condition includes any one of:
a current working mode being a second mode;
a current working mode switching from a first mode to a second mode;
registration being failed within a preset time period after a daughter card is started up; and
a state of the daughter card switching from a successful-registration state to an unsuccessful-registration state.

2. The method according to claim 1, **characterized in that**, determining according to the phone number whether to perform registration code querying comprises at least one of:
performing the registration code querying when the phone number is a first specific number; and
performing the registration code configuration when the phone number is a second specific number.

3. The method according to claim 1, **characterized in that**, determining according to the phone number whether to perform registration code querying comprises:
sending, when the phone number is a third specific number, to a phone an audio file corresponding to a first voice prompt for reminding a phone user to input an operation type; receiving and converting a first key value to a corresponding operation type; and
at least one of:
performing the registration code querying when the operation type corresponding to the first key value is querying; and
performing the registration code configuration when the operation type corresponding to the first key value is configuration.

4. The method according to claim 2 or 3, **characterized in that**, performing the registration code querying comprises:
sending to the phone an audio file corresponding to a second voice prompt for reminding the phone user to input a registration type;
receiving and converting a second key value to a corresponding registration type, and acquiring a registration value that corresponds to the registration type corresponding to the second key value from pre-saved registration values corresponding to registration types; and
sending to the phone an audio file corresponding to a third voice prompt for playing the acquired registration value.

5. The method according to claim 2 or 3, **characterized in that**, performing the registration code configuration comprises:
sending to the phone an audio file corresponding to a second voice prompt for reminding the phone user to input a registration type;
receiving and converting a second key value to a corresponding registration type, and sending to the phone an audio file corresponding to a fourth voice prompt for reminding the phone user to input a registration value; and
receiving and converting a third key value to a corresponding registration value, and modifying a pre-saved registration value that corresponds to the registration type corresponding to the second key value to the registration value corresponding to the third key value.

6. The method according to claim 2 or 3, **characterized in that**, after performing the registration code configuration, the method further comprises any one of:
sending to the phone an audio file corresponding to a fifth voice prompt for reminding that the configuration made by the phone user is successful;
sending to the phone an audio file corresponding to a sixth voice prompt for reminding that the configuration made by the phone user is failed and a seventh voice prompt for reminding the phone user to perform an input once again;
sending to the phone the audio file corresponding to the sixth voice prompt for reminding that the configuration made by the phone user is failed; and
reporting a registration value corresponding to a registration type to an optical line terminal, OLT.

7. An apparatus for processing a registration code, **characterized in that**, the apparatus comprises: a processor and a memory storing instructions thereon, wherein the instructions, when executed by the processor, implement any one of the methods for processing a registration code according to claims 1 to 6.

8. A computer-readable medium, which stores a computer program thereon, **characterized in that**, the computer program, when executed by a processor, implements steps of any one of the methods for processing a registration code according to claims 1 to 6.

9. An apparatus for processing a registration code, **characterized in that**, the apparatus comprises:
a processing module, which is configured to determine, when a preset condition is met and a phone number is received, according to the phone number whether to perform registration code querying or registration code configuration,
wherein, the preset condition includes any one of:
a current working mode being a second mode;
a current working mode switching from a first mode to a second mode;
registration being failed within a preset time period after a daughter card is started up; and
a state of the daughter card switching from a successful-registration state to an unsuccessful-registration state.

10. A system for processing a registration code, **characterized in that**, the system comprises:
an optical network unit, ONU, which is configured to determine, when a preset condition is met and a phone number is received, according to the phone number whether to perform registration code querying or registration code configuration, wherein, the preset condition includes any one of: a current working mode being a second mode; a current working mode switching from a first mode to a second mode; registration being failed within a preset time period after a daughter card is started up; and a state of the daughter card switching from a successful-registration state to an unsuccessful-registration state; and
a phone, which is configured to send a phone number to the ONU.
